# EUROPÄISCHE PATENTSCHRIFT

(11) **EP 3 380 694 B1**
(45) Veröffentlichungstag und Bekanntmachung des Hinweises auf die Patenterteilung: **01.09.2021**
(21) Anmeldenummer: 16819424.9
(22) Anmeldetag: 25.11.2016
(51) Int. Cl.: E05F 5/02, E05F 5/00

(54) **ZYLINDER-KOLBEN-EINHEIT MIT AUSGLEICHSDICHTELEMENT**
CYLINDER-PISTON UNIT WITH A COMPENSATING SEALING ELEMENT
UNITÉ CYLINDRE-PISTON MUNIE D'UN ÉLÉMENT D'ÉTANCHÉITÉ À COMPENSATION

(30) Priorität: 26.11.2015 DE 102015015170
(43) Veröffentlichungstag der Anmeldung: 03.10.2018
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2016/000420
(87) Internationale Veröffentlichungsnummer: WO 2017/088847

(56) Entgegenhaltungen:
- DE-A1- 2 051 595
- DE-A1- 2 738 809
- DE-A1-102011 083 744
- GB-A- 813 551
- JP-A- 2007 255 446
- US-A- 3 269 718
- US-A1- 2002 162 450

## Beschreibung

Die Erfindung betrifft eine hydraulische Zylinder-Kolben-Einheit mit einem einen mittels einer Zylinderinnenwandung und zwei Stirnwänden begrenzten Zylinderinnenraum aufweisenden Zylinder, mit einem im Zylinderinnenraum mittels einer Kolbenstange geführten Kolben sowie mit einem, im Zylinderinnenraum geführten, relativ zum Kolben beweglichen, elastisch verformbarem Ausgleichsdichtelement, wobei eine Ausgleichsfeder zwischen dem Ausgleichsdichtelement und der nächstgelegenen, den Zylinderinnenraum begrenzenden Stirnwand angeordnet ist wobei das Ausgleichsdichtelement mit zwei zueinander beabstandeten Dichtringen an der Zylinderinnenwandung geführt ist, wobei die Ausgleichsfeder unmittelbar am Ausgleichsdichtelement abgestützt ist und wobei das Ausgleichsdichtelement zusätzlich auf der Kolbenstange mittels eines Innendichtrings geführt ist.

Aus der DE 10 2013 001 650 A1 ist eine Zylinder-Kolben-Einheit bekannt. Sie umfasst einen federbelasteten Ausgleichskolben, der ein Dichtelement führt.

Aus der DE 27 38 809 A1 ist eine hydraulische Zylinder-Kolben-Einheit mit einem auf einer Kolbenstange sitzenden Ausgleichsdichtelement bekannt. Das Ausgleichsdichtelement kann beim Verschieben verkanten.

Gemäß der GB 813 551 A und der US 3 269 718 A1 wird das mittels einer Schrauben- bzw. Gasfeder belastete Ausgleichsdichtelement eines hydraulischen Stoßdämpfers im Verdrängungsraum angeordnet. Ein derartiges Dichtelement ist auch in der DE 10 2011 083 744 A1 , in der US 2002/162,450 A1 und in der DE 20 51 596 A1 dargestellt.

Die JP 2007-255446 A offenbart eine Zylinder-Kolben-Einheit mit einem am Ausgleichsdichtelement anliegenden federbelasteten Ring.

Der vorliegenden Erfindung liegt die Aufgabe zugrunde, den Aufbau der Zylinder-Kolben-Einheit zu vereinfachen.

Diese Problemstellung wird mit den Merkmalen des Hauptanspruches gelöst. Dazu ist der Innendichtring in Richtung des Kolbens versetzt zu dem durch die Dichtringe begrenzten Abschnitt des Ausgleichsdichtelements angeordnet.

Weitere Einzelheiten der Erfindung ergeben sich aus den Unteransprüchen und der nachfolgenden Beschreibung schematisch dargestellter Ausführungsformen.
- Figur 1:: Dämpferbaugruppe von unten;
- Figur 2:: Längsschnitt einer ausgefahrenen Zylinder-Kolben-Einheit;
- Figur 3:: Längsschnitt der eingefahrenen Zylinder-Kolben-Einheit;
- Figur 4:: Isometrische Ansicht des Ausgleichsdichtelements von der Kolbenseite;
- Figur 5:: Isometrische Ansicht des Ausgleichsdichtelements von der Zylinderkopfdeckelseite;
- Figur 6:: Schnittdarstellung des unverformten Ausgleichsdichtelements.

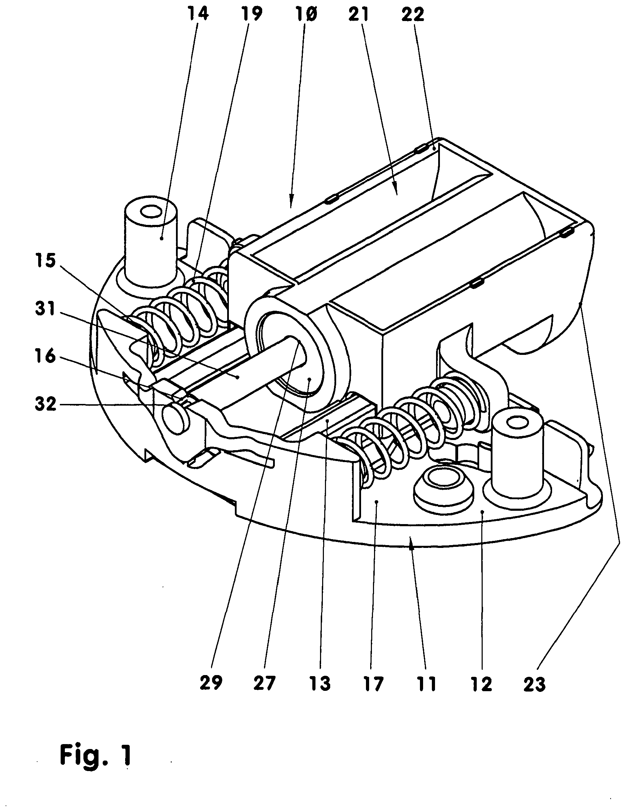

Die Figur 1 zeigt eine Dämpferbaugruppe (10). Derartige Dämpferbaugruppen (10) werden beispielsweise in Topfscharnieren eingesetzt, um die Bewegung zueinander bewegter Möbelteile zu verzögern. Die Dämpferbaugruppe (10) sitzt hierbei in einen Scharniertopf des Topfscharniers.

Die in der Figur 1 von der Unterseite dargestellte Dämpferbaugruppe (10) weist ein Trägerteil (11), eine Zylinder-Kolben-Einheit (21) und zwei Rückstellfedern (19) auf. Das Trägerteil (11) umfasst eine z.B. halbkreisförmige Trägerscheibe (12), an der eine Zylinderführung (13), Abstützzapfen (14) und Federaufnahmen (15) angeformt sind. Weiterhin hat die Trägerscheibe (12) eine Kolbenstangenaufnahme (16), in der die Kolbenstange (31) der Zylinder-Kolben-Einheit (21) gelagert ist, deren Zylinder (22) in der Zylinderführung (13) axial verschiebbar ist. Der Zylinder (22) ist mittels der Rückstellfedern (19) an den Federaufnahmen (15) des Trägerteils (11) abgestützt. Diese als Druckfedern (19) ausgebildeten Rückstellfedern (19) belasten die Zylinder-Kolben-Einheit (21) in die ausgefahrene Stellung. Die aus der Unterseite (17) der Trägerscheibe (12) hervorstehenden Abstützzapfen (14) stützen die eingebaute Dämpferbaugruppe (10) im Scharniertopf ab.

Der Zylinder (22) der Zylinder-Kolben-Einheit (21) hat einen Zylinderboden (23), dessen Außenfläche (24) über die Trägerscheibe (12) übersteht. Bei einer in einen Scharniertopf eingebauten Dämpferbaugruppe (10) ragt der schräg ausgebildete Zylinderboden (23) in den Scharniertopf hinein. Beim Schließen des Scharniers kann so ein Montagearm oder ein Gelenkarm am Zylinderboden (23) entlanggleiten, wobei der Zylinder (22) in Richtung des Kolbestangenkopfes (32) der Kolbenstange (31) verschoben wird.

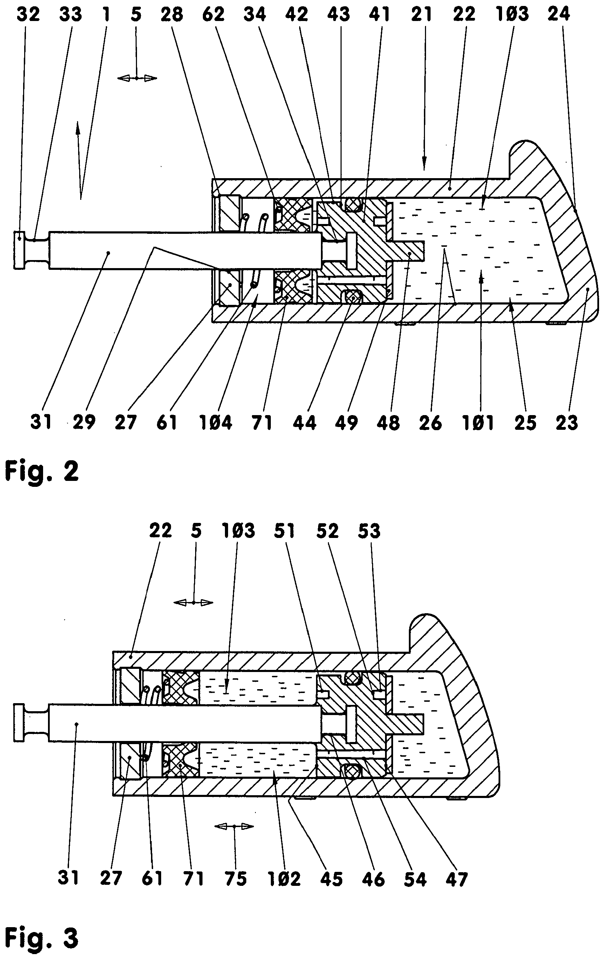

Die Figur 3 zeigt in einem Längsschnitt die Zylinder-Kolben-Einheit (21) in einer eingefahrenen Stellung. In der Figur 2 ist diese Zylinder-Kolben-Einheit (21) in einer ausgefahrenen Stellung dargestellt. Der Zylinder (22) der dargestellten hydraulischen Zylinder-Kolben-Einheit (21) hat einen Zylinderinnenraum (25) mit einer kreisförmigen Innenquerschnittsfläche. Dieser Zylinderinnenraum (25) ist mittels einer Zylinderinnenwandung (26), dem Zylinderboden (23) und einem Zylinderkopfdeckel (27) begrenzt. Der Zylinderboden (23) und der Zylinderkopfdeckel (27) bilden Stirnwände (23, 27) des Zylinderinnenraums (25). Im Ausführungsbeispiel hat der Zylinderinnenraum (25) einen Durchmesser von 4,3 Millimetern.

Die Zylinderinnenwandung (26) hat in ihrem dem Kolbenstangenkopf (32) zugewandten Endbereich eine umlaufende Ringnut (28). In dieser Ringnut (28) sitzt mit einer Übergangspassung der Zylinderkopfdeckel (27). Der Zylinderkopfdeckel (27) ist im Ausführungsbeispiel eine planparallele gelochte Scheibe, deren Innendurchmesser beispielsweise um einen zehntel Millimeter größer ist als der Durchmesser der die Bohrung (29) durchdringende Kolbenstange (31). Der Durchmesser der Bohrung (29) des Zylinderkopfdeckels (27) kann z.B. bis zu 60 % größer sein als der Durchmesser der Kolbenstange (31). Im Ausführungsbeispiel ist der Zylinderkopfdeckel (27) aus Polyoxymethylen (POM) hergestellt. Die Dicke des Zylinderkopfdeckels (27) beträgt beispielsweise zwischen 15 % und 25 % des Innendurchmessers des Zylinderinnenraums (25), der sich zwischen dem Zylinderboden (23) und der Ringnut (28) erstreckt. Im Ausführungsbeispiel beträgt die Dicke des Zylinderkopfdeckels (27) 18,6 % des Durchmessers des Zylinderinnenraums (25).

Die zylindrisch ausgebildete Kolbenstange (31) hat im Ausführungsbeispiel einen Durchmesser von 35 % des Innendurchmessers des Zylinderinnenraums (25) und eine Länge von 13,75 Millimetern. An ihren beiden Enden hat die Kolbenstange (31) identisch ausgebildete Ringnuten (33, 34). Im eingebauten Zustand ist eine außen liegende Ringnut (33) in der Kolbenstangenaufnahme (16) des Trägerteils (11) gehalten. Die innenliegende Ringnut (34) trägt einen Kolben (41).

Der Kolben (41) ist zylindrisch aufgebaut und hat an seiner Umfangsfläche (42) eine Dichtelementringnut (43). In dieser Dichtelementringnut (43) sitzt ein Kolbendichtelement (44). Im Ausführungsbeispiel ist dies ein Kolbendichtring (44), z.B. in der Bauform eines O-Ringes. Auf seiner der Kolbenstange (31) zugewandten Stirnseite (45) hat der Kolben (41) eine Kolbenstangenausnehmung (46). Diese Kolbenstangenausnehmung (46) ist komplementär zum kolbenseitigen Ende der Kolbenstange (31) ausgebildet, wobei der Kolben (41) in die innenliegende Ringnut (34) eingreift.

Auf der der Kolbenstangenausnehmung (46) abgewandten Stirnseite (47) ist an den Kolben (41) ein zentraler Führungszapfen (48) angeformt. Auf diesem Führungszapfen (48) sitzt axial verschiebbar eine Kolbenscheibe (49). Der Hub der Kolbenscheibe (49) ist mittels des Kolbens (41) und beispielsweise einer Verdickung des Führungszapfens (48) begrenzt. Die Kolbenscheibe (49) hat z.B. eine Dicke von 0,25 Millimetern. Im Ausführungsbeispiel ist die Kolbenscheibe (49) flexibel ausgebildet. Ihr Außendurchmesser beträgt z.B. 90 % des Außendurchmessers des Kolbens (41). Beispielsweise bei aufliegender Kolbenscheibe (49) besteht ein Restspalt zwischen der Kolbenstirnfläche (47) und der Kolbenscheibe (49).

An beiden Stirnseiten (45, 47) des Kolbens (41) sind ringförmige Sammelnuten (51, 52) eingeprägt, die die gleiche Tiefe haben und einander gegenüber angeordnet sind. Die kolbenstangenseitige Sammelnut (51) hat parallel zueinander angeordnete Nutflanken, während die Nutflanken (53) der kolbenscheibenseitigen Sammelnut (52) im Ausführungabeispiel einen Öffnungswinkel von 1,2 Grad haben.

Die beiden Sammelnuten (51, 52) sind mittels dreier Verbindungskanäle (54) miteinander verbunden. Diese Verbindungskanäle (54) haben den gleichen Abstand zueinander. Ihre Querschnittsfläche entspricht einem entlang der Sammelnut (51) gebogenen Oval, wobei die Querschnittsfläche in Richtung der kolbenscheibenseitigen Sammelnut (52) zunimmt. Der Öffnungswinkel entspricht im Ausführungsbeispiel dem Öffnungswinkel der Nutflanken (53) der kolbenscheibenseitigen Sammelnut (52). Zwischen dem Kolben (41) und dem Zylinderkopfdeckel (27) sind eine Ausgleichsfeder (61) und ein Ausgleichsdichtelement (71) angeordnet. Die Ausgleichsfeder (61) ist eine Schraubenfeder (61) in der Bauform einer Druckfeder. Sie umgibt die Kolbenstange (31) und stützt sich am Zylinderkopfdeckel (27) ab. Diese Ausgleichsfeder (61) hat im Ausführungsbeispiel zweieinhalb Windungen und einen konstanten Drahtdurchmesser von 0,2 Millimetern. Der Windungsdurchmesser des vom Zylinderkopfdeckel (27) abgewandten Endes (62) der Ausgleichsfeder (61) ist beispielsweise um 11 % größer als der kleinste Windungsdurchmesser.

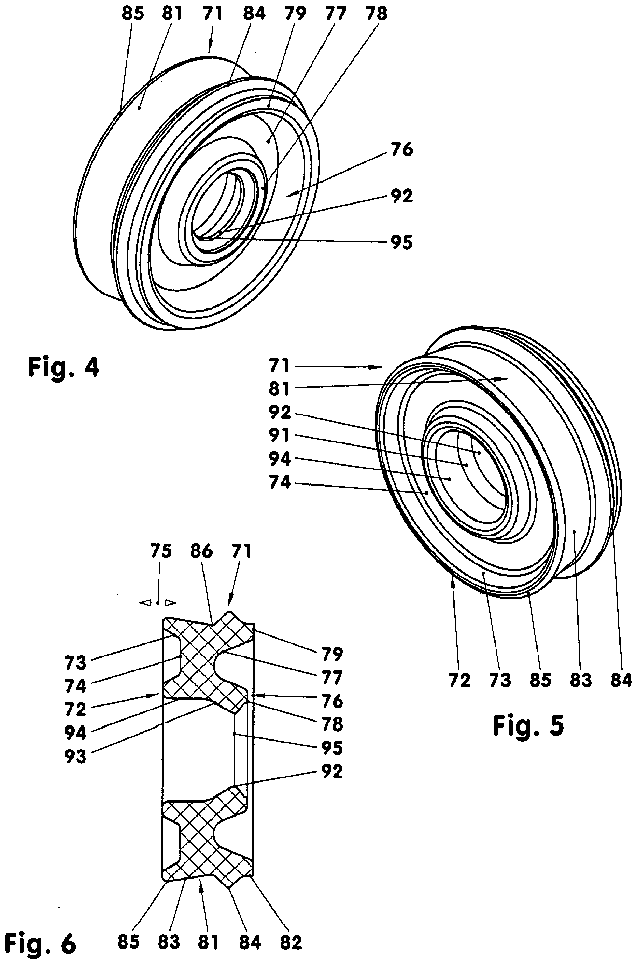

Das Ausgleichsdichtelement (71) ist als Einzelteil in den Figuren 4 und 5 und in einer Schnittdarstellung in der Figur 6 dargestellt. Es ist ringförmig ausgebildet und hat beispielsweise einen Außendurchmesser von 4,6 Millimetern und einen Innendurchmesser von 26 % dieses Durchmessers. Der Außendurchmesser ist damit im Ausführungsbeispiel um 7 % größer als der Innendurchmesser des Zylinders (22), sodass das in den Zylinder (22) eingesetzte Ausgleichsdichtelement (71) an die Zylinderinnenwandung (26) angepresst ist. Die Länge des Ausgleichsdichtelements (71) beträgt z.B. ein Drittel seines unverformten Außendurchmessers. Der Innendurchmesser des unverformten Ausgleichsdichtelements (71) beträgt 80 % des Außendurchmessers der Kolbenstange (31), sodass im eingebauten Zustand das Ausgleichsdichtelement (71) auf die Kolbenstange (31) gepresst ist. Der Innendurchmesser kann beispielsweise zwischen 70 % und 90 % des Kolbenstangendurchmessers betragen. Das Ausgleichsdichtelement (71) ist im Ausführungsbeispiel aus Nitrilbutadienkautschuk (NBR) mit einer Härte von 70 Shore hergestellt.

Auf seiner dem Zylinderkopfdeckel (27) zugewandten Stirnseite (72) hat das Ausgleichsdichtelement (71) eine ringförmige Federaufnahmerinne (73). Diese hat eine Tiefe von z.B. 0,3 Millimetern. Der Nutgrund (74) der Federaufnahmerinne (73) liegt innerhalb des durch zwei Dichtringe (84, 85) begrenzten Bereichs des Ausgleichsdichtelements (71). Die Breite der Federaufnahmerinne (73) normal zur Längsrichtung (75) des Ausgleichsdichtelements (71) beträgt beispielsweise ein Zehntel des Außendurchmessers. Diese Breite ist symmetrisch zu einer gedachten ringförmigen Mittellinie der Federaufnahmerinne (73), deren Durchmesser 67 % des Außendurchmessers des Ausgleichsdichtelements (71) beträgt. Der Durchmesser dieser ringförmigen Mittellinie liegt außerhalb des durch den Innendurchmesser und den Außendurchmesser bestimmten mittleren Durchmessers des Ausgleichsdichtelements (71).

Die dem Zylinderkopfdeckel (27) abgewandte und dem Kolben (41) zugewandte Stirnseite (76) ist zweistufig ausgebildet und hat eine ringförmig ausgebildete Druckrinne (77) mit einem annähernd U-förmigen Querschnitt. Der Durchmesser des im Scheitel des U liegenden Kreises beträgt z.B. 61 % des Außendurchmessers des Ausgleichsdichtelements (71). Die innere Stufe (78) der Stirnseite (76) ist um 7 % der Länge des Ausgleichsdichtelements (71) gegenüber der äußeren Stufe (79) in der dem Kolben (41) abgewandten Richtung versetzt.

An seiner Umfangsfläche (81) hat das Ausgleichsdichtelement (71) eine Bundfläche (82), eine Verbindungsfläche (83) und die zwei Dichtringe (84, 85). In dem in der Figur 6 dargestellten Längsschnitt ist die Konturlinie der Umfangsfläche (81) eine stetig differenzierbare Linie.

Die Bundfläche (82) grenzt an die kolbenseitige Stirnfläche (76) an. Sie ist zylindrisch ausgebildet. Ihr Durchmesser beträgt beispielsweise 91 % des Außendurchmessers des Ausgleichsdichtelements (71).

An diese Bundfläche (82) schließt ein erster Dichtring (84) an. Der Außendurchmesser dieses Dichtrings (84) entspricht dem Außendurchmesser des Ausgleichsdichtelements (71). Er ist zwischen 5 % und 10 % größer als der Innendurchmesser des Zylinderinnenraums (25). Der Spitzenradius der Konturlinie im Bereich des ersten Dichtrings (84) beträgt beispielsweise 1 % des Außendurchmessers des Ausgleichsdichtelements (71). Die zulässige Rundlaufabweichung des ersten Dichtrings (84) zum Innendurchmesser des Ausgleichsdichtelements (71) beträgt z.B. ebenfalls 1 % des genannten Außendurchmessers. Der Mittenabstand des Dichtrings (84) zur kolbenseitigen Stirnfläche (76) beträgt z.B. 26 % der Länge des Ausgleichsdichtelements (71).

Die Verbindungsfläche (83) verbindet die beiden Dichtringe (84, 85). Sie hat im Ausführungsbeispiel eine Einsenkung (86), deren minimaler Durchmesser kleiner ist als der Durchmesser der Bundfläche (82).

Der zweite Dichtring (85) grenzt an die zum Zylinderkopfdeckel (27) orientierte Stirnseite (72) des Ausgleichsdichtelements (71) an. Sein Außendurchmesser beträgt im Ausführungsbeispiel 95 % des Außendurchmessers des Ausgleichsdichtelements (71). Dieser Durchmesser ist beispielsweise zwischen 2 % und 7 % größer als der Innendurchmesser des Zylinderinnenraums (25). Der Radius der Konturlinie im Bereich des zweiten Dichtrings (85) beträgt im Ausführungsbeispiel 1,7 % des Außendurchmessers des Ausgleichsdichtelements (71). Der Abstand der beiden Dichtringe beträgt z.B. 68 % der Länge des Ausgleichsdichtelements (71). Dieser Abstand kann beispielsweise zwischen 50 % und 80 % der Länge des Ausgleichsdichtelements (71) betragen.

Die Innenfläche (91) des Ausgleichsdichtelements (71) umfasst einen Innendichtring (92), einen Übergangsbereich (93) und einen zylindrischen Bereich (94). Die im Längsschnitt der Figur 6 dargestellte Konturlinie der Innenfläche (91) ist eine stetig differenzierbare Kurve, die einen Scheitelpunkt im Bereich des Innendichtrings (92) aufweist. Dieser Scheitelpunkt ist ein Punkt einer kreisförmigen, normal zur Längsrichtung (75) des Ausgleichsdichtelements (71) orientierten Scheitellinie (95). Der Innendurchmesser des Innendichtrings (92) entspricht dem Innendurchmesser des Ausgleichsdichtelements (71). In der Längsrichtung (75) beträgt der Abstand der Scheitellinie (95) von der äußeren Stufe (79) der kolbenseitigen Stirnseite (76) 20 % der Länge des Ausgleichsdichtelements (71). Der Innendichtring (92) liegt damit außerhalb des durch die beiden Außendichtringe (84, 85) begrenzten Bereichs. Er ist in Richtung der kolbenseitigen Stirnseite (41) versetzt. Im Längsschnitt beträgt der Radius des Innendichtrings (92) 1 % des Außendurchmessers des Ausgleichsdichtelements (71). Der an den Innendichtring (92) anschließende Übergangsbereich (93) geht in den zylindrischen Bereich (94) über. Der Durchmesser dieses zylindrischen Bereichs (94) beträgt im Ausführungsbeispiel 37 % des Außendurchmessers des Ausgleichsdichtelements (71). Der Innendurchmesser des zylindrischen Bereichs (94) ist damit um 13 % größer als der Durchmesser der Kolbenstange (31). Der zylindrische Bereich (94) grenzt an die zylinderdeckelseitige Stirnseite (72) des Ausgleichsdichtelements (71) an. Der Innendurchmesser der dem Kolben (41) abgewandten Stirnseite (72) des Ausgleichsdichtelements (71) ist damit mindestens um 10 % größer als der Außendurchmesser der Kolbenstange (31).

Bei der Montage der Zylinder-Kolben-Einheit (21) wird beispielsweise der Kolben (41) mit dem darin eingesetzten Kolbendichtring (44) und der auf den Kolben (41) aufgesetzten Kolbenscheibe (49) auf die Kolbenstange (31) aufgesetzt und mit dieser verrastet. Außerdem kann das Ausgleichsdichtelement (71) auf die Kolbenstange (31) unter Verformung des Innendichtrings (92) aufgeschoben werden.

Diese vormontierte Einheit kann in den mit Öl (103) vorbefüllten Zylinder (22) eingeschoben werden. Auf die Kolbenstange (31) wird die Ausgleichsfeder (61) derart aufgeschoben, dass das größere Ende (62) am Ausgleichsdichtelement (71) anliegt. Das Ende (62) der Ausgleichsfeder (61) liegt dabei außerhalb des mittleren Durchmessers des Ausgleichsdichtelements (71) an diesem an. Zum Abschluss wird der Zylinderkopfdeckel (27) auf die Kolbenstange (31) aufgeschoben und in der Ringnut (28) der Zylinderinnenwandung (26) verrastet. Im montierten Zustand ist die Kolbenstange (31) beispielsweise fast vollständig ausgefahren. Im Zylinderinnenraum (25) ist die Ausgleichsfeder (61) entspannt und das Ausgleichsdichtelement (71) liegt am Kolben (41) an oder hat einen geringen Abstand zu diesem.

Die Zylinder-Kolben-Einheit (21) kann nun in das Trägerteil (11) eingesetzt werden. Hierbei wird der Zylinder (22) in die Zylinderführung (13) eingeschoben und die Kolbenstange (31) mit der Kolbenstangenringnut (33) in der Kolbenstangenaufnahme (16) verrastet. Nach dem Einsetzen der Rückstellfedern (19) kann die Dämpferbaugruppe (10) in einen Scharniertopf eines Topfscharniers eingebaut werden.

Der beispielsweise beim Schließen der Tür auf den Zylinderboden (23) auftreffende Montagearm gleitet am Zylinderboden (23) entlang. Hierbei verschiebt er den Zylinder (22) entgegen der Wirkung der Zylinder-Kolben-Einheit (21) und der Rückstellfedern (19) in der Längsrichtung (5) der Zylinder-Kolben-Einheit (21). Die Längsrichtung (5) der Zylinder-Kolben-Einheit (21) ist in die gleiche Richtung orientiert wie die Längsrichtung (75) des Ausgleichsdichtelements (71). In der Zylinder-Kolben-Einheit (21) wird der Zylinder (22) relativ zur feststehenden Kolbenstange (31) verschoben, die sich hierbei im Scharniertopf abstützt. Im Zylinderinnenraum (25) trennt der Kolben (41) einen Verdrängungsraum (101) zwischen dem Zylinderboden (23) und dem Kolben (41) von einem Ausgleichsraum (102) zwischen dem Kolben (41) und dem Ausgleichsdichtelement (71) ab. Bei dieser Belastung wird Öl (103) aus dem Verdrängungsraum (101) z.B. durch den Spalt zwischen der Kolbenscheibe (49) und dem Kolben (41) und durch die Längskanäle (54) des Kolbens (41) hindurch in den Ausgleichsraum (102) verdrängt. Das Ausgleichsdichtelement (71) wird entgegen der Wirkungsrichtung der Ausgleichsfeder (61) belastet. Die Flächenbelastung der Kolbenseite (76) des Ausgleichsdichtelements (71) ist nahezu konstant. Die Kolbenstange (31) gleitet entlang des Innendichtrings (92) von der in der Figur 2 dargestellten ausgefahrenen Stellung in Richtung der in der Figur 3 dargestellten eingefahrenen Stellung. Dem hierbei auf das Ausgleichsdichtelement (71) wirkenden Torsionsmoment wirkt die außermittig angreifende Ausgleichsfeder (61) entgegen, die mit einem Gegenmoment das Ausgleichsdichtelement (71) stabilisiert. Das Ausgleichsdichtelement (71) wird mittels der Ausgleichsfeder (61) so belastet, dass der Innendichtring (92) verstärkt an die Kolbenstange (31) angepresst wird.

Das Ausgleichsdichtelement (71) trennt den Ausgleichsraum (102) hermetisch gegen einen Federraum (104) ab, in dem die Ausgleichsfeder (61) angeordnet ist. Der ölfreie Federraum (104) ist im Ausführungsbeispiel nicht gegen die Umgebung (1) abgedichtet.

Beim Stillstand der Kolbenstange (31), z.B. nach Beendigung des Hubs, wirkt weiterhin eine zumindest annähernd gleichmäßige Flächenpressung auf die Kolbenseite (76) des Ausgleichsdichtelements (71). Die Ausgleichsfeder (61) belastet das Ausgleichsdichtelement (71) beispielsweise derart, dass der zweite Außendichtring (85) verstärkt an die Zylinderinnenwandung (26) angepresst wird. Diese Dreilinienabstützung des Ausgleichsdichtelements (71) sichert die Abdichtung sowohl beim Schließen des Topfscharniers als auch im geschlossenen Zustand.

Beim Öffnen des Topfscharniers wird z.B. der Montagearm vom Zylinderboden (23) abgehoben. Der Zylinder (22) wird mittels der Rückstellfedern (19) in Richtung der ausgefahrenen Stellung belastet. Er verfährt relativ zur Kolbenstange (31) von der in der Figur 3 dargestellten eingefahrenen Stellung in die in der Figur 2 dargestellte ausgefahrene Stellung. Hierbei wird das Öl (103) aus dem Ausgleichsraum (102) durch die Längskanäle (54) des Kolbens (41) hindurch in den Verdrängungsraum (101) verdrängt. Die Kolbenscheibe (49) kann von der Kolbenstirnseite (45) abheben, sodass das Öl (103) weitgehend ungehindert strömt.

Im Zylinderinnenraum (25) schiebt die Ausgleichsfeder (61) das Ausgleichsdichtelement (71) relativ zur Kolbenstange (31) in Richtung des Kolbens (41). Hierbei werden sowohl der zweite äußere Dichtring (85) an die Zylinderinnenwandung (26) als auch der Innendichtring (92) an die Kolbenstange (31) angepresst. Das Ausgleichsdichtelement (71) dichtet so den Ausgleichsraum (102) hermetisch vom Federraum (104) des Zylinderinnenraums (25) ab, sodass kein Öl (103) in den Federraum (104) gelangt.

Sobald die Zylinder-Kolben-Einheit (21) wieder die in der Figur 2 dargestellte Ausgangsstellung erreicht hat, ist die Dämpferbaugruppe (10) für ein erneutes Schließen des Topfscharniers einsatzbereit.

Die Zylinder-Kolben-Einheit (21) kann auch derart aufgebaut sein, dass der Verdrängungsraum (101) kolbenstangenseitig angeordnet ist. Bei einer derartigen Ausführungsform sitzt dann z.B. auch die Kolbenscheibe (49) kolbenstangenseitig auf dem Kolben (41). Das Ausgleichsdichtelement (71) kann auf der einen oder der anderen Seite des Kolbens (41) angeordnet sein, wobei es mittels der Ausgleichsfeder (61) an der nächstgelegenen Stirnwand (23; 27) des Zylinders (22) abgestützt ist.

Auch Kombinationen der einzelnen Ausführungsbeispiele sind denkbar.

### Bezugszeichenliste:

- 1: Umgebung
- 5: Längsrichtung

- 10: Dämpferbaugruppe
- 11: Trägerteil
- 12: Trägerscheibe
- 13: Zylinderführung
- 14: Abstützzapfen
- 15: Federaufnahmen
- 16: Kolbenstangenaufnahme
- 17: Unterseite
- 19: Rückstellfedern, Druckfedern

- 21: Zylinder-Kolben-Einheit
- 22: Zylinder
- 23: Zylinderboden, Stirnwand
- 24: Außenfläche von (23)
- 25: Zylinderinnenraum
- 26: Zylinderinnenwandung
- 27: Zylinderkopfdeckel, Stirnwand
- 28: Ringnut
- 29: Bohrung

- 31: Kolbenstange
- 32: Kolbenstangenkopf
- 33: Ringnut, außen
- 34: Ringnut, innen

- 41: Kolben
- 42: Umfangsfläche
- 43: Dichtelementringnut
- 44: Kolbendichtelement, Kolbendichtring
- 45: Stirnseite, (31) zugewandt
- 46: Kolbenstangenausnehmung
- 47: Stirnseite, (31) abgewandt
- 48: Führungszapfen
- 49: Kolbenscheibe

- 51: Sammelnut
- 52: Sammelnut, kolbenscheibenseitig
- 53: Nutflanken von (52)
- 54: Verbindungskanäle, Längskanäle

- 61: Ausgleichsfeder, Schraubenfeder, Druckfeder
- 62: Ende von (61)

- 71: Ausgleichsdichtelement
- 72: Stirnseite, (27) zugewandt
- 73: Federaufnahmerinne
- 74: Nutgrund
- 75: Längsrichtung
- 76: Stirnseite, (41) zugewandt, Kolbenseite
- 77: Druckrinne
- 78: innere Stufe
- 79: äußere Stufe

- 81: Umfangsfläche
- 82: Bundfläche
- 83: Verbindungsfläche
- 84: Dichtring, erster Dichtring, Außendichtring
- 85: Dichtring, zweiter Dichtring, Außendichtring
- 86: Einsenkung

- 91: Innenfläche
- 92: Innendichtring
- 93: Übergangsbereich
- 94: zylindrischer Bereich
- 95: Scheitellinie

- 101: Verdrängungsraum
- 102: Ausgleichsraum
- 103: Öl
- 104: Federraum

## Patentansprüche

1. Hydraulische Zylinder-Kolben-Einheit (21) mit einem einen mittels einer Zylinderinnenwandung (26) und zwei Stirnwänden (23, 27) begrenzten Zylinderinnenraum (25) aufweisenden Zylinder (22), mit einem im Zylinderinnenraum (25) mittels einer Kolbenstange (31) geführten Kolben (41) sowie mit einem, im Zylinderinnenraum (25) geführten, relativ zum Kolben (41) beweglichen, elastisch verformbarem Ausgleichsdichtelement (71), wobei eine Ausgleichsfeder (61) zwischen dem Ausgleichsdichtelement (71) und der nächstgelegenen, den Zylinderinnenraum (25) begrenzenden Stirnwand (23; 27) angeordnet ist, wobei das Ausgleichsdichtelement (71) mit zwei zueinander beabstandeten Dichtringen (84, 85) an der Zylinderinnenwandung (26) geführt ist, wobei die Ausgleichsfeder (61) unmittelbar am Ausgleichsdichtelement (71) abgestützt ist und wobei das Ausgleichsdichtelement (71) zusätzlich auf der Kolbenstange (31) mittels eines Innendichtrings (92) geführt ist,
**dadurch gekennzeichnet,**
**dass** der Innendichtring (92) in Richtung des Kolbens (41) versetzt zu dem durch die Dichtringe (84, 85) begrenzten Abschnitt des Ausgleichsdichtelements (71) angeordnet ist.

2. Hydraulische Zylinder-Kolben-Einheit (21) nach Anspruch 1, **dadurch gekennzeichnet, dass** der Abstand der Dichtringe (84, 85) größer ist als 50 % der Länge des Ausgleichsdichtelements (71).

3. Hydraulische Zylinder-Kolben-Einheit (21) nach Anspruch 1, **dadurch gekennzeichnet, dass** das Ausgleichsdichtelement (71) auf seiner der nächstgelegenen Stirnwand (23; 27) zugewandten Stirnseite (72) eine ringförmige Federaufnahmerinne (73) aufweist, in der die Ausgleichsfeder (61) gelagert ist.

4. Hydraulische Zylinder-Kolben-Einheit (21) nach Anspruch 3, **dadurch gekennzeichnet, dass** der Nutgrund (74) der Federaufnahmerinne (73) innerhalb des durch die Dichtringe (84, 85) begrenzten Abschnitts des Ausgleichsdichtelements (71) liegt.

5. Hydraulische Zylinder-Kolben-Einheit (21) nach Anspruch 1, **dadurch gekennzeichnet, dass** die Ausgleichsfeder (61) sich außerhalb des durch den Innendurchmesser und den Außendurchmesser des Ausgleichsdichtelements (71) bestimmten mittleren Durchmessers des Ausgleichsdichtelements (71) abstützt.

6. Hydraulische Zylinder-Kolben-Einheit (21) nach Anspruch 1, **dadurch gekennzeichnet, dass** beim unverformten Ausgleichsdichtelement (71) der Außendurchmesser des ersten, dem Kolben (41) zugewandten Außendichtrings (84) mindestens 5 % und maximal 10 % größer ist als der Innendurchmesser des Zylinderinnenraums (25) und dass der Außendurchmesser des zweiten, dem Kolben (41) abgewandten Außendichtrings (85) mindestens 2 % und maximal 7 % größer ist als der Innendurchmesser des Zylinderinnenraums (25).

7. Hydraulische Zylinder-Kolben-Einheit (21) nach Anspruch 1, **dadurch gekennzeichnet, dass** der Innendurchmesser der dem Kolben (41) abgewandten Stirnseite (72) des Ausgleichsdichtelements (71) mindestens um 10 % größer ist als der Außendurchmesser der Kolbenstange (31).

## Claims

1. Hydraulic cylinder-piston unit (21) with a cylinder (22) having a interior cylinder chamber (25) confined by means of an interior cylinder wall (26) and two end walls (23, 27), with a piston (41) guided in the interior cylinder chamber (25) by means of a piston rod (31) and with an elastically deformable compensating sealing element (71) which is guided in the interior cylinder chamber (25) and is movable relative to the piston (41), wherein a compensating spring (61) is arranged between the compensating sealing element (71) and the nearest end wall (23, 27) confining the interior cylinder chamber (25), wherein the compensating sealing element (71) is guided on the interior cylinder wall (26) by means of two sealing rings (84, 85) spaced apart from each other, wherein the compensating spring (61) is supported directly on the compensating sealing element (71) and wherein the compensating sealing element (71) is additionally guided on the piston rod (31) by means of an interior sealing ring (92),
**characterized in that**
the interior sealing ring (92) is arranged offset in the direction of the piston (41) to the portion of the compensating sealing element (71) confined by the sealing rings (84, 85).

2. Hydraulic cylinder-piston unit (21) according to claim 1, **characterized in that** the spacing between the sealing rings (84, 85) is greater than 50% of the length of the compensating sealing element (71).

3. Hydraulic cylinder-piston unit (21) according to claim 1, **characterized in that** the compensating sealing element (71) has an annular spring-receiving groove (73), in which the compensating spring (61) is supported, on its front side (72) facing the nearest end wall (23, 27).

4. Hydraulic cylinder-piston unit (21) according to claim 3, **characterized in that** the groove bottom (74) of the spring-receiving groove (73) is positioned within the portion of the compensating sealing element (71) confined by the sealing rings (84, 85).

5. Hydraulic cylinder-piston unit (21) according to claim 1, **characterized in that** the compensating spring (61) is supported outside the mean diameter of the compensating sealing element (71) defined by the inner diameter and the outer diameter of the compensating sealing element (71).

6. Hydraulic cylinder-piston unit (21) according to claim 1, **characterized in that**, in the case of an undeformed compensating sealing element (71), the outer diameter of the first outer sealing ring (84) facing the piston (41) is at least 5 % and no more than 10 % greater than the inner diameter of the interior cylinder chamber (25), and that the outer diameter of the second outer sealing ring (85) facing away from the piston (41) is at least 2 % and no more than 7 % greater than the inner diameter of the interior cylinder chamber (25).

7. Hydraulic cylinder-piston unit (21) according to claim 1, **characterized in that** the inner diameter of the front side (72) facing away from the piston (41) of the compensating sealing element (71) is at least 10 % greater than the outer diameter of the piston rod (31).

## Revendications

1. Unité hydraulique piston/cylindre (21), pourvue d'un cylindre (22), comportant un espace intérieur de cylindre (25) délimité à l'aide d'une paroi intérieure de cylindre (26) et de deux parois frontales (23, 27), pourvue d'un piston (41) guidé dans l'espace intérieur de cylindre (25) à l'aide d'une tige de piston (31) et pourvue d'un élément d'étanchéité compensateur (71) guidé dans l'espace intérieur de cylindre (25), élastiquement déformable, mobile par rapport au piston (41), un ressort de compensation (61) étant placé entre l'élément d'étanchéité compensateur (71) et la paroi frontale (23 ; 27) la plus proche, délimitant l'espace intérieur de cylindre (25), l'élément d'étanchéité compensateur (71) étant guidé par deux bagues d'étanchéité (84, 85) écartées l'une de l'autre sur la paroi intérieure de cylindre (26), le ressort de compensation (61) étant appuyé directement sur l'élément d'étanchéité compensateur (71) et l'élément d'étanchéité compensateur (71) étant guidé en supplément sur la tige de piston (31) à l'aide d'une bague d'étanchéité interne (92), **caractérisée**
**en ce que** la bague d'étanchéité interne (92) est décalée dans la direction du piston (41) par rapport à la partie de l'élément d'étanchéité compensateur (71) qui est délimitée par les bagues d'étanchéité (84, 85).

2. Unité hydraulique piston/cylindre (21) selon la revendication 1, **caractérisée en ce que** l'écart entre les bagues d'étanchéité (84, 85) est supérieur à 50 % de la longueur de l'élément d'étanchéité compensateur (71) .

3. Unité hydraulique piston/cylindre (21) selon la revendication 1,
**caractérisée en ce que** sur sa face frontale (72) qui est dirigée vers la paroi frontale (23 ; 27) la plus proche, l'élément d'étanchéité compensateur (71) comporte une gorge de logement de ressort (73) de forme annulaire, dans laquelle est logé le ressort de compensation (61).

4. Unité hydraulique piston/cylindre (21) selon la revendication 3,
**caractérisée en ce que** le fond de rainure (74) de la gorge de logement de ressort (73) se situe à l'intérieur de la partie de l'élément d'étanchéité compensateur (71) qui est délimitée par les bagues d'étanchéité (84, 85) .

5. Unité hydraulique piston/cylindre (21) selon la revendication 1,
**caractérisée en ce que** le ressort de compensation (61) s'appuie à l'extérieur du diamètre central de l'élément d'étanchéité compensateur (71) déterminé par le diamètre intérieur et le diamètre extérieur de l'élément d'étanchéité compensateur (71).

6. Unité hydraulique piston/cylindre (21) selon la revendication 1, **caractérisée** en ce lorsque l'élément d'étanchéité compensateur (71) n'est pas déformé, le diamètre extérieur de la première bague d'étanchéité externe (84) qui est dirigée vers le piston (41) est supérieur d'au moins 5 % et d'un maximum de 10 % au diamètre intérieur de l'espace intérieur de cylindre (25) et en ce que le diamètre extérieur de la deuxième bague d'étanchéité externe (85) qui est opposée au piston (41) est supérieur d'au moins 2 % et d'un maximum de 7 % au diamètre intérieur de l'espace intérieur de cylindre (25).

7. Unité hydraulique piston/cylindre (21) selon la revendication 1, **caractérisée en ce que** le diamètre intérieur de la face frontale (72) de l'élément d'étanchéité compensateur (71) qui est opposée au piston (41) est supérieure d'au moins 10 % au diamètre extérieur de la tige de piston (31).
